(19)

Europäisches
Patentamt
European
Patent Office
Office européen
des brevets

(11) **EP 2 357 739 A1**

(12) **EUROPEAN PATENT APPLICATION**
published in accordance with Art. 153(4) EPC

(43) Date of publication:
**17.08.2011 Bulletin 2011/33**

(51) Int Cl.:
***H04B 10/12*** *(2006.01)*

(21) Application number: **09827174.5**

(22) Date of filing: **17.11.2009**

(86) International application number:
**PCT/CN2009/074979**

(87) International publication number:
**WO 2010/057425 (27.05.2010 Gazette 2010/21)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.11.2008 CN 200810177646**

(71) Applicant: **Huawei Technologies Co., Ltd.
Shenzhen, Guangdong 518129 (CN)**

(72) Inventors:
• **ZHANG, Guangyong
  Guangdong 518129 (CN)**
• **SHEN, Shuqiang
  Guangdong 518129 (CN)**

(74) Representative: **Pfenning, Meinig & Partner GbR
Patent- und Rechtsanwälte
Theresienhöhe 13
80339 München (DE)**

(54) **OPTICAL SWITCHING METHOD AND DEVICE**

(57) A method and a device for optical switching are disclosed. The method includes: receiving input optical signals; switching the input optical signals to an optical grouping unit when the input optical signals need to be grouped, and then receiving grouped optical signals; and switching the grouped optical signals to corresponding output ports for outputting. The device includes an optical switching unit and an optical grouping unit. A part of output ports of the optical switching unit are connected to input ports of the optical grouping unit, and output ports of the optical grouping unit are connected to input ports of the optical switching unit. The optical switching unit is configured to control transmission paths of the optical signals, and the optical grouping unit is configured to group the optical signals.

FIG. 1

EP 2 357 739 A1

**Description**

The application claims priority to Chinese Patent Application No. 200810177646.1, filed on November 20, 2008, and entitled "METHOD AND DEVICE FOR OPTICAL SWITCHING", which is incorporated herein by reference in its entirety.

**FIELD OF THE TECHNOLOGY**

The present invention relates to the field of communications technology, and more particularly to a method and a device for optical switching.

**BACKGROUND OF THE INVENTION**

The current dense wavelength division multiplexing (DWDM) technologies enable one optical fiber to accommodate hundreds of wavelengths, and each wavelength has a transmission rate of up to 40 Gbit/s or even 100 Gbit/s, and the capacity of one optical fiber is up to the magnitude of Tbit/s, meeting demands for network bandwidth. Meanwhile, the DWDM technologies make the network cost and the control complexity increased significantly. As the number of the wavelengths accommodated in an optical fiber is up to hundreds, the number of ports for optical fiber switching and wavelength switching in optical cross-connect (OXC) is largely increased, and the cost of the optical switching is increased significantly. At the same time, the larger the scale of the OXC is, the more difficult and complex the control of the OXC will be. It is assumed that 20 input optical fibers and 20 output optical fibers are provided at a node, and 100 wavelengths are transmitted in each optical fiber simultaneously; if a common OXC node is used, 2000 input ports, 2000 output ports, and a 2000 x 2000 optical switch matrix are needed, resulting in high cost and complexity of the OXC. Furthermore, the development of a network towards a dynamic full mesh network has higher requirements on the dimension of service signals. Due to the dynamic and flexible property of the network, the wavelengths are dispatched with time, and at different time points, the dimension of the wavelengths that needs to be switched is different, so that higher requirements are made on the dimension of service signals. Therefore, a switching structure capable of realizing multiple granularities and multiple dimensions, having extensibility, and capable of being flexibly upgraded is of great importance for the construction and management of a dynamic network.

In order to solve the problem of increased switching cost and control complexity caused by the development of the optical network technology, a multi-granularity optical switching technology is set forth. The multi-granularity optical switching technology means to perform optical fiber switching, waveband switching, and wavelength switching simultaneously in the same optical node. The waveband switching refers to that multiple wavelengths form a waveband for performing switching as a unit, reducing the number of ports needed for switching, and decreasing the cost. Meanwhile, three switching granularities, that is, optical fiber, waveband, and wavelength, are provided, which can be adjusted flexibly according to service requirements, thereby reducing the control complexity.

The multi-granularity optical switching technology can be realized by an optical switching structure with a multiplexer and demultiplexer (DEMUX) loopback. The solution can dynamically switch and transparently transmit the added/dropped wavebands and wavelengths. Each output port of the DEMUX loopback has cycle passbands, and therefore any waveband can be demultiplexed into single wavelengths. The DEMUX divides an input DWDM channel into wavebands and directly sends the wavebands to an optical switch, and then the optical switch dispatches the wavelengths according to requirements. The solution can realize optical fiber-level, wavelength-level, and waveband-level switching.

However, in practice, not all the wavelengths need to be demultiplexed into single wavelengths by the DEMUX for switching. According to the foregoing solution, the DEMUX demultiplexes all the wavelengths into waves of single wavelengths and sends the waves to the switching unit, so that switching ports are occupied, and the ports of the optical switching unit are wasted.

**SUMMARY OF THE INVENTION**

Accordingly, the present invention is directed to a method and a device for optical switching, to save the switching ports.

In order to achieve the above objective, an optical switching method according to an embodiment of the present invention is realized by the following technical solution:

receiving input optical signals;

switching the optical signals to an optical grouping unit when the input optical signals need to be grouped, and receiving grouped optical signals; and

switching the grouped optical signals to corresponding output ports for outputting.

An embodiment of the present invention further provides another optical switching method, including:

receiving optical signals switched by an optical switching device ;

grouping the optical signals; and

sending the grouped optical signals to the optical switching device.

An embodiment of the present invention further provides an optical switching device, which includes an optical switching unit and an optical grouping unit.

A part of output ports of the optical switching unit are connected to input ports of the optical grouping unit, and output ports of the optical grouping unit are connected to input ports of the optical switching unit.

The optical switching unit is configured to control transmission paths of optical signals, and the optical grouping unit is configured to group optical signals.

The technical solutions have the following beneficial effects. In the optical switching scheme of grouping optical signals with the optical grouping unit and then switching the optical signals with the optical switching unit, the optical signals are combined according to requirements, so that the demand for the switch matrix is reduced, saving ports of the optical switching unit.

**BRIEF DESCRIPTION OF THE DRAWINGS**

FIG. 1 is a schematic structural view of a device according to Embodiment 1 of the present invention;

FIG. 2a is a schematic structural view of an optical switching unit according to Embodiment 1 of the present invention;

FIG. 2b is a schematic structural view of an optical switching unit according to Embodiment 1 of the present invention;

FIG. 2c is a schematic structural view of an optical grouping unit according to Embodiment 1 of the present invention;

FIG. 3a is a schematic structural view of a device according to Embodiment 2 of the present invention;

FIG. 3b is a schematic structural view of another device according to Embodiment 2 of the present invention;

FIG. 3c is a schematic structural view of another device according to Embodiment 3 of the present invention;

FIG. 4a is a schematic structural view of a device according to Embodiment 3 of the present invention;

FIG. 4b is a schematic structural view of another device according to Embodiment 3 of the present invention; and

FIG. 5 is a schematic structural view of a device according to Embodiment 4 of the present invention.

**DETAILED DESCRIPTION OF THE EMBODIMENTS**

The present invention provides a method and a device for optical switching, to save the switching ports.
In an embodiment, the present invention provides an optical switching method, which includes:

receiving input optical signals are received; switching the input optical signals to an optical grouping unit when the input optical signals need to be grouped; and receiving grouped optical signals; and switching the grouped optical signals to corresponding output ports for outputting.

After the receiving of the input optical signals, the method may further include: transmitting the input optical signals to a service switching unit when the optical signals switched by the optical switching unit need service switching, and receiving service-switched optical signals; and switching service-switched optical signals to corresponding output ports for outputting.

The outputting of the grouped optical signals over the corresponding output ports may be: switching a part of the grouped optical signals to the optical grouping unit; receiving re-grouped optical signals; switching the other part of the optical signals to corresponding output ports for outputting, and switching the re-grouped optical signals to corresponding output ports for outputting.

The implementation objects of the foregoing solutions may be a strictly non-blocking optical switch.

From another point of view, the switching method may include:

receiving the optical signals switched by an optical switching device; grouping the optical signals; and transmitting the grouped optical signals to the optical switching device.

The optical signals switched by the optical switching device include the grouped optical signals.

The implementation objects of the solution may be a wavelength selective switch (WSS).

The method according to the foregoing embodiment will be further illustrated with reference to the device according to subsequent embodiments.

The optical switching process is completed by grouping optical signals with the optical grouping unit and then switching the optical signals with the optical switching unit, and as the optical signals are combined according to requirements, the demand for the switch matrix is reduced, saving ports of the optical switching unit.

**Embodiment 1**

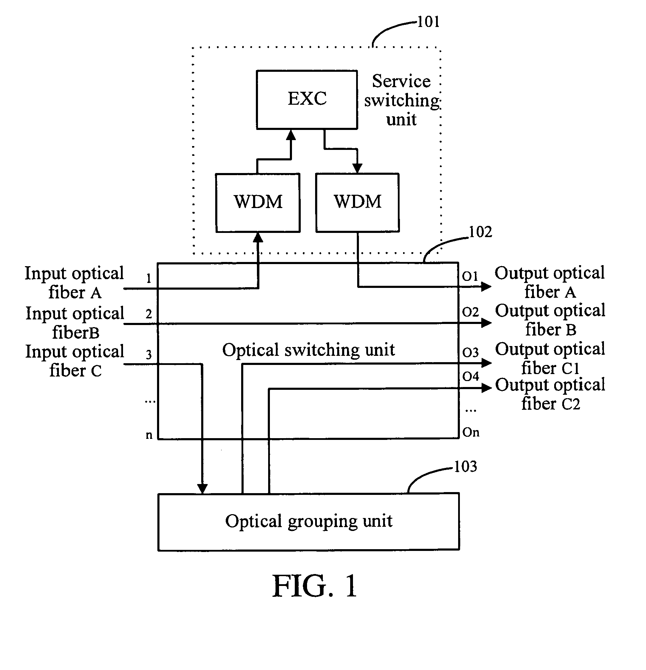

As shown in FIG. 1, an optical switching device according to this embodiment of the present invention includes an optical switching unit 102, an optical grouping unit 103, and a service switching unit 101. This embodiment of the present invention is illustrated with multi-granularity switching as the background.

The optical switching unit 102 has optical input ports and optical output ports, where a part of the optical output ports are connected to input ports of the optical grouping unit 103.

The optical grouping unit 103 has the optical input ports and optical output ports, where the optical input ports of the optical grouping unit 103 are connected to the optical output ports of the optical switching unit 102, and the optical output ports of the optical grouping unit 103 are connected to the optical input ports of the optical switching unit 102.

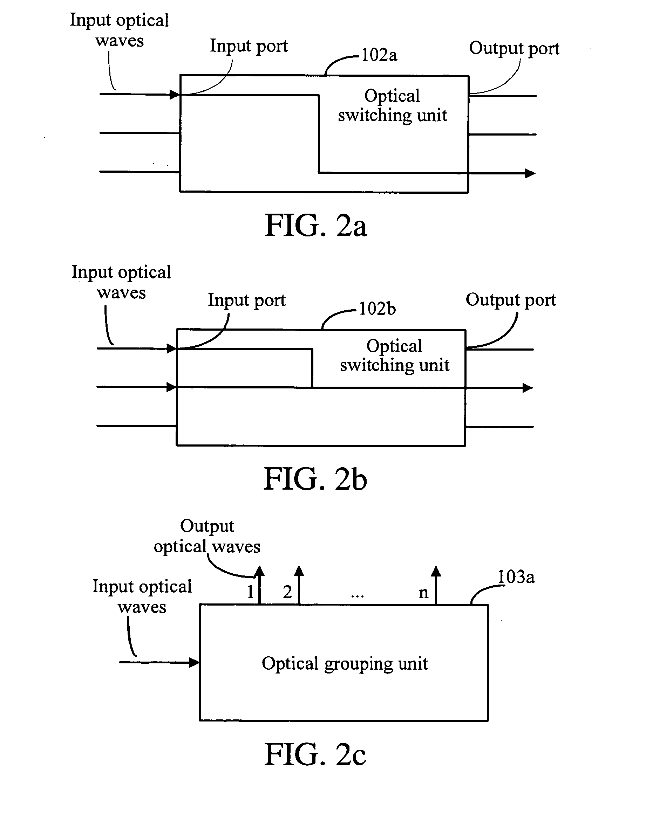

The optical switching unit 102 is configured to control transmission paths of optical signals. For example, as shown in FIGs. 2a and 2b, an optical switching unit 102a has the function of inputting and outputting over a random port; and an optical switching unit 102b has the function of inputting over multiple ports and outputting over one port. The optical grouping unit 103 is configured to group the optical signals. For example, as shown in FIG 2c, an optical grouping unit 103a has the function of randomly grouping and outputting input optical fiber wavelengths. It can be understood that, the function of inputting over multiple ports and outputting over one port in FIG 2b may also be realized by the optical grouping unit 103a; the specific implementation is inputting the optical signals over multiple ports, and outputting the optical signals from the same output port when the optical signals are grouped (the path of the optical signals is in a reverse direction of the path shown in FIG. 2c). Lines without an arrow in FIGs. 2a and 2b represent input ports or output ports, while lines with an arrow represent the transmission traces of the light.

Hereinafter, this embodiment of the present invention is described with several common implementation schemes of granularity switching.

Optical fiber switching: An input optical fiber may be directly output from any port through the optical switching unit 102, as shown by the trace of an optical fiber B in FIG. 1

The optical fiber switching flow is: input optical fiber B —> optical switching unit 102 —> output optical fiber B

Wavelength grouping and wavelength switching: Wavelengths in the input optical fiber may be randomly grouped through the optical grouping unit 103; as shown in FIG. 1, the wavelengths of an input optical fiber C are grouped into groups C1 and C2, which are output from ports 03 and 04 respectively, that is, output from an output optical fiber C1 and an output optical fiber C2 respectively.

The wavelength grouping and wavelength switching flow is as follows:

$$\text{Input optical fiber C} \rightarrow \text{optical switching unit} \rightarrow \text{optical grouping unit} \begin{cases} \text{Group C1} \rightarrow \text{optical switching unit} \rightarrow \text{output port O3} \\ \text{Group C2} \rightarrow \text{optical switching unit} \rightarrow \text{output port O4} \end{cases}$$

Sub-wavelength switching: After service switching is performed on the wavelengths in the input optical fiber through electrical cross-connect (EXC), the wavelengths are loaded into other random optical fibers. As shown in FIG. 1, the wavelengths in an input optical fiber A pass through the service switching unit 101, where the service switching unit may be formed of wavelength division multiplexing (WDM)-EXC-WDM, the wavelengths in the input optical fiber A are output from O1 after service switching by the WDM-EXC-WDM, and definitely, the wavelengths may also be loaded into other groups for outputting.

The sub-wavelength switching flow is as follows:

Input optical fiber A→optical switching unit→WDM→EXC→WDM→optical switching unit→output port

Service switching

It can be known from the solution that, the device may only include the optical grouping unit 103 and the optical switching unit 102.

The optical switching unit 102 may be a strictly non-blocking optical switch, and may have a single-level structure or a cascade structure, for example, a three-dimensional micro electromechanical system (3D MEMS) single-level structure. The optical grouping unit 103 can realize any wavelength combination, and may include WSSs, where the number of the WSSs is determined by the maximum number of the switching dimensions of network nodes made up by the optical switching structure in the network, and the scale of the optical switching unit 102 may be a sum of the number of the input optical fibers and the number of the switching dimensions at peak times. This embodiment of the present invention does not limit the specific forms of the optical switching unit 102 and the optical grouping unit 103, which does not affect the implementation of this embodiment.

The optical fiber switching may be directly performed by the optical switching unit 102; the wavelength grouping and wavelength switching is implemented after grouping with the optical grouping unit 103; and as the wavelengths are combined according to requirements, the demand for the switch matrix is reduced. It is assumed that 9 input optical fibers (F1, F2, ..., F9) are provided, where the input optical fiber F1 needs to be grouped into 8 groups at time T1, F2 needs to be grouped into 5 groups at time T1, and F3 to F9 need to be directly connected in series. As the F1 needs to be grouped into 5 groups at time T2, and F2 needs to be grouped into 8 groups at time T2, grouping resources occupied by the optical fiber F1 can be released to the optical fiber F2 for sharing. If the 9 optical fibers need to be grouped into 40 groups in total at the peak time, only 49 x 49 switching units are needed. However, in industrial solutions, F1 to F9 are connected to an optical switching matrix after DEMUX, and with 80 waves per optical fiber as an example, the scale of the required switching units is 720 x 720. It can be seen that, the solution of the present invention can significantly reduce the scale requirement for the optical switching unit 102.

Due to the flexibility of internal connection within optical switches, the output of the WSS may be sent to the next-level WSS, so as to realize flexible combination of the WSSs, and implement switching of different dimensions.

**Embodiment 2**

An embodiment of the present invention further provides an optical switching device. This embodiment of the present invention is illustrated with sharing of an optical grouping unit as the background.

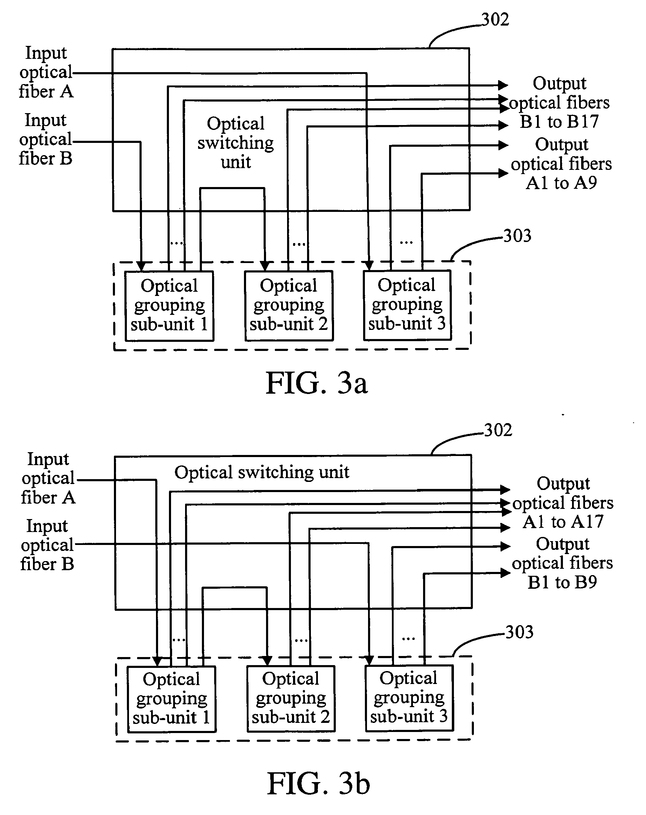

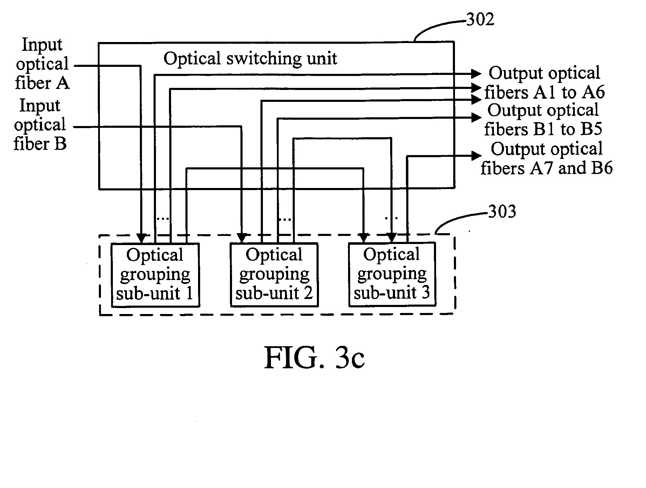

As shown in FIG. 3a, the device may include an optical switching unit 302 and an optical grouping unit 303. The extension of the dimension is realized through sharing of an optical grouping sub-unit. It is assumed that at time T1, an optical fiber A is required to output 9 dimensions, and an optical fiber B is required to output 17 dimensions. As shown in FIG. 3b, at time T2, the optical fiber A is required to output 17 dimensions, and the optical fiber B is required to output 9 dimensions. As shown in FIG. 3c, at time T3, the optical fiber A is required to output 7 dimensions, the optical fiber B is required to output 6 dimensions, and the optical fiber A7 and the optical fiber B6 need to be combined into 1 dimension.

In this embodiment, the optical switching unit may be formed of 3D MEMS large-scaled optical switches, and the optical grouping unit may include optical grouping sub-units. It is assumed that the optical grouping sub-unit has the function of 1 port for inputting and 9 dimensions for outputting, and it can be understood that the number of the input ports and the number of the output ports may also be other values, which may not be regarded as a limitation to the present invention.

At time T1, the input optical fiber A is input to an optical grouping sub-unit 3 in the optical grouping unit through the optical switching unit, forming 9-dimension outputting; and similarly, the input optical fiber B forms 17-dimension outputting through optical grouping sub-units 1 and 2.

The connection relations at time To are as follows:

Input optical fiber A ——> optical switching unit ——> optical grouping sub-unit 3 ——> optical switching unit ——> output optical fiber

Input optical fiber B ——> optical switching unit ——> optical grouping sub-unit 1 ——>

$\left\{\begin{array}{l}\text{——> optical switching unit ——> output optical fiber}\\\text{——> optical grouping sub-unit 2 ——> optical switching unit ——> output optical}\end{array}\right.$

fiber

At time T2, me number or the output dimensions or the input optical fiber A changes to 17, and the number of the output dimensions of the input optical fiber B changes to 9. This change may be implemented by switching the connections between the input optical fibers A and B of the optical switching unit and the optical grouping sub-units.
The connection relations at time T2 are as follows:

Input optical fiber B ——> optical switching unit ——> optical grouping sub-unit 3 ——> optical switching unit ——> output optical fiber

Input optical fiber A ——> optical switching unit ——> optical grouping sub-unit 1

$\left\{\begin{array}{l}\text{——> optical switching unit ——> output optical fiber}\\\text{——> optical grouping sub-unit 2 ——> optical switching unit ——> output optical}\end{array}\right.$

fiber

At time T3, the number of the output dimensions of the input optical fiber A changes to 7, and the number of the output dimensions of the input optical fiber B changes to 6, where A7 and B6 are combined into 1 dimension. The total output dimensions of the optical fibers A and B are 12.

Input optical fiber A ——> optical switching unit ——> optical grouping sub-unit 1 ——> optical switching unit

> optical switching unit ———> output optical fiber

> optical grouping sub-unit 3 ———> optical switching unit ———> output optical fiber

Input optical fiber B ———> optical switching unit ———> optical grouping sub-unit 2 ———> optical switching unit

> optical switching unit ———> output optical fiber

> optical grouping sub-unit 3 ———> optical switching unit ———> output optical fiber

Furthermore, when the number of the output dimensions changes, the optical grouping unit may release idle optical grouping units, achieving the purpose of saving the optical grouping sub-units

The optical grouping sub-units directly transmit the optical signals that need to be re-grouped to other optical grouping sub-units, which is implemented in the following manner: The optical grouping unit is formed of optical grouping sub-units, including a first optical grouping sub-unit, a second optical grouping sub-unit, and a third optical grouping sub-unit.

Input ports of the first optical grouping sub-unit are connected to output ports of the optical switching unit, a part of output ports of the first optical grouping sub-unit are connected to input ports of the third optical grouping sub-unit, and a part of output ports of the first optical grouping sub-unit are connected to input ports of the optical switching unit.

The input ports of the third optical grouping sub-unit are connected to the output ports of the first optical grouping sub-unit, a part of output ports of the third optical grouping sub-unit are connected to input ports of the second optical grouping sub-unit, and a part of output ports of the third optical grouping sub-unit are connected to the input ports of the optical switching unit.

The input ports of the second optical grouping sub-unit are connected to the output ports of the third optical grouping sub-unit, and output ports of the second optical grouping sub-unit are connected to the input ports of the optical switching unit.

In the embodiment, the optical switching process is completed by grouping the optical signals with the optical grouping unit and then switching the optical signals with the optical switching unit, and as the optical signals are combined according to requirements, the demand for the switch matrix is reduced, saving ports of the optical switching unit. Furthermore, optical grouping sub-units are saved through sharing the optical grouping sub-units.

**Embodiment 3**

An embodiment of the present invention provides an optical switching device. This embodiment of the present invention is illustrated with dimension extension as the background.

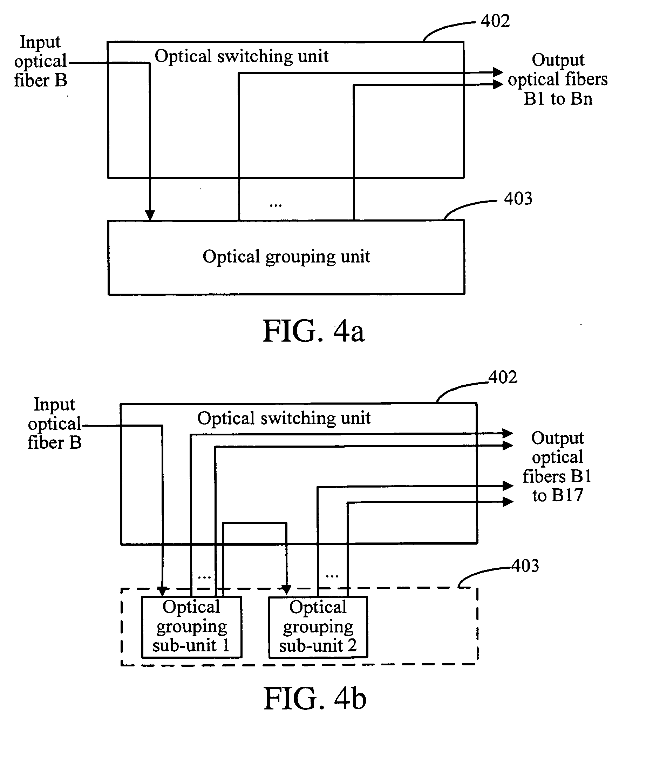

As shown in FIG. 4a, the device includes an optical switching unit 402 and an optical grouping unit 403.

In this embodiment, wavelengths of the input optical fiber B are initially grouped into groups B1 and B2. Now, it is assumed that the wavelengths of the input optical fiber B need to be grouped into n groups, the input optical fiber B is input to the optical grouping unit 403 through the optical switching unit 402, and the optical grouping unit 403 groups the wavelengths into n groups and then sends the grouped wavelengths to the optical switching unit 402, so that the optical grouping unit 403 can output the n groups to any output ports, realizing the output grouping and extension. The extension of the optical grouping unit 403 is implemented by extending optical grouping sub-units.

The specific flow is as follows:

Initial groups { B1, B2 } ⟹ Groups after extension { B1', B2', ⋮ Bn }

The switching flow is as follows:

Input optical fiber B → optical grouping unit {
Group B1'  → optical switching unit → output port O2
Group B2'  → optical switching unit → output port O3
... ... ... ... ... ... ... ... ... ...
Group Bn'  → optical switching unit → output port On
}

Furthermore, switching dimensions may also be extended by the optical grouping sub-units. It is assumed that, at time T1, the input optical fiber B is required to output 9 dimensions, and at time T2, the input optical fiber B is required to output 17 dimensions.

At time T1, referring to FIG. 4a, the difference lies in that the number of the dimensions of the output optical fiber is 9 instead of n; the input optical fiber B is required to output 9 dimensions, and the requirement is realized by the grouping sub-unit 1, that is, the input optical fiber is input to the grouping sub-unit 1 through the optical switching unit 402, and the grouping sub-unit 1 groups the input optical fiber into 9 groups and then sends the grouped optical fibers to the optical switching unit 402 for outputting. At time T2, as shown in FIG. 4b, the optical grouping unit 403 is formed of optical grouping sub-units. The number of the output dimension of the input optical fiber B is changed to 17, which is realized by adding one level of the optical grouping sub-unit 2. The first-level optical grouping sub-unit 1 is re-grouped, where one group of output is sent to the optical switching unit 402 and input to the second-level optical grouping sub-unit 2, and the optical grouping sub-unit 2 groups the wavelengths and sends the grouped wavelengths to the optical switching unit 402 for realizing 17-dimension outputting.

In the embodiment, the optical switching process is completed by grouping with the optical signals the optical grouping unit and then switching the optical signals with the optical switching unit, and as the optical signals are combined according to requirements, the demand for the switch matrix is reduced, saving ports of the optical switching unit.

**Embodiment 4**

An embodiment of the present invention further provides an optical switching device. This embodiment of the present invention is illustrated with wavelength dispatching as the background.

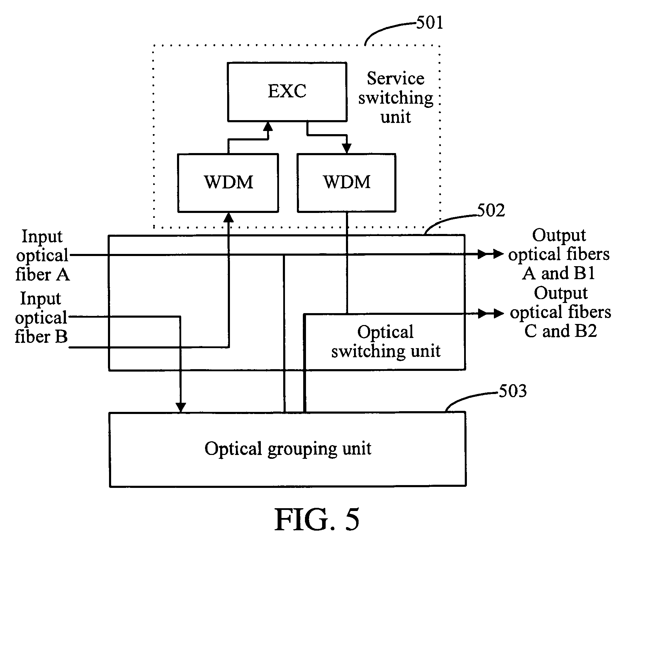

As shown in FIG. 5, the device includes an optical switching unit 502, an optical grouping unit 503, and a service switching unit 501. It is assumed that the wavelengths $\lambda 1$, $\lambda 2$, $\lambda 3$, and M in an input optical fiber B are required to be switched to an optical fiber A.

The dispatching process may be: The input optical fiber B is switched to the optical grouping unit 503 through the optical switching unit 502, and the optical grouping unit 503 divides the wavelengths in the optical fiber B into two groups, that is, B1 ($\lambda 1$, $\lambda 2$, $\lambda 3$, and M) and B2 ($\lambda 5$, ..., $\lambda 80$) and sends the grouped wavelengths to the optical switching unit 502; the optical switching unit 502 groups B, and switches B1 ($\lambda 1$, $\lambda 2$, $\lambda 3$, and M) to an output port O1 together with the input optical fiber A, switching the wavelengths ($\lambda 1$, $\lambda 2$, $\lambda 3$, and M) to the optical fiber A. The other group B2 ($\lambda 5$, ..., $\lambda 80$) is output through other ports according to requirements.

In the embodiment, the optical switching process is completed by grouping optical signals with the optical grouping unit and switching the optical signals with the optical switching unit, and as the optical signals are combined according to requirements, the demand for the switch matrix is reduced, saving ports of the optical switching unit.

Persons of ordinary skill in the art should understand that all or a part of the steps of the method according to the embodiments of the present invention may be implemented by a program instructing relevant hardware. The program may be stored in a computer readable storage medium. The storage medium may be a read only memory (ROM), a magnetic disk, or a compact disk.

The method and the device for optical switching provided in the embodiments of the present invention are described in detail above. The principle and implementation of the present invention are described herein through specific examples. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limitation to the present invention.

**Claims**

1. An optical switching method, comprising:

   receiving input optical signals;
   switching the input optical signals to an optical grouping unit when the input optical signals need to be grouped; and then receiving grouped optical signals; and
   switching the grouped optical signals to corresponding output ports for outputting.

2. The method according to claim 1, wherein after receiving the input optical signals, the method further comprises:

   switching the input optical signals to a service switching unit when the input optical signals need service switching, and then receiving service-switched optical signals; and
   switching the service-switched optical signals to corresponding output ports for outputting.

3. The method according to claim 1 or 2, wherein the switching of the grouped optical signals to the corresponding output ports for outputting comprises:

   sending a part of the grouped optical signals to the optical grouping unit;
   receiving re-grouped optical signals; and
   outputting the other part of the grouped optical signals over required output ports, and outputting the re-grouped optical signals over required output ports.

4. The method according to claim 1 or 2, wherein the outputting over the corresponding output ports comprises:

   outputting the optical signals over the output ports after at least one of wavelength switching, optical fiber switching, and sub-wavelength switching is performed on the optical signals according to requirements.

5. An optical switching method, comprising:

   receiving optical signals switched by an optical switching device;
   grouping the optical signals; and
   sending grouped optical signals to the optical switching device.

6. The method according to claim 5, wherein the received optical signals switched by the optical switching device comprises:

   the grouped optical signals.

7. The method according to claim 5 or 6, wherein the grouping comprises:

   grouping according to wavelengths.

8. The method according to claim 5 or 6, wherein:

   idle input and output ports are released when dimensions of the optical signals switched by the optical switching device that need to be grouped are reduced.

9. An optical switching device, comprising:

   an optical switching unit and an optical grouping unit, wherein a part of output ports of the optical switching unit are connected to input ports of the optical grouping unit, and output ports of the optical grouping unit are connected to input ports of the optical switching unit,
wherein the optical switching unit is configured to control transmission paths of optical signals, and the optical grouping unit is configured to group the optical signals.

10. The device according to claim 9, further comprising a service switching unit,
wherein
a part of the output ports of the optical switching unit are connected to the service switching unit, output ports of the service switching unit are connected to the input ports of the optical switching unit; and the service switching unit is configured to switch services.

11. The device according to claim 9 or 10, wherein
the optical grouping unit is formed of at least one optical grouping sub-unit,
wherein input ports of the optical grouping sub-unit are connected to the output ports of the optical switching unit, and output ports of the optical grouping sub-unit are connected to the input ports of the optical switching unit; and the optical grouping sub-unit is configured to group the optical signals.

12. The device according to claim 11, wherein
the optical grouping sub-unit is further configured to release idle input and output ports when dimensions of the optical signals switched by the optical switching unit that need to be grouped are reduced.

FIG. 1

Input optical
waves     Input port     ⌐102a     Output port

Optical
switching unit

## FIG. 2a

Input optical
waves     Input port     ⌐102b     Output port

Optical
switching unit

## FIG. 2b

Output
optical waves

Input optical
waves     1    2    ...    n    103a

Optical grouping unit

## FIG. 2c

FIG. 3a

FIG. 3b

302

Input optical fiber A

Input optical fiber B

Optical switching unit

Output optical fibers A1 to A6

Output optical fibers B1 to B5

Output optical fibers A7 and B6

303

...

Optical grouping sub-unit 1

...

Optical grouping sub-unit 2

. . .

Optical grouping sub-unit 3

## FIG. 3c

402

Input optical fiber B

Optical switching unit

Output optical fibers B1 to Bn

...

403

Optical grouping unit

## FIG. 4a

402

Input optical fiber B

Optical switching unit

Output optical fibers B1 to B17

403

...

...

Optical grouping sub-unit 1

Optical grouping sub-unit 2

## FIG. 4b

FIG. 5

## INTERNATIONAL SEARCH REPORT

| International application No. |
| --- |
| PCT/CN2009/074979 |

**A. CLASSIFICATION OF SUBJECT MATTER**

H04B10/12 (2006.01) i

According to International Patent Classification (IPC) or to both national classification and IPC

**B. FIELDS SEARCHED**

Minimum documentation searched (classification system followed by classification symbols)

IPC: H04B, H04L

Documentation searched other than minimum documentation to the extent that such documents are included in the fields searched

Electronic data base consulted during the international search (name of data base and, where practicable, search terms used)

WPI, EPODOC, CNKI, CPRS: optical w wave?, classif+, wavelength, optical w switch+, group+

**C. DOCUMENTS CONSIDERED TO BE RELEVANT**

| Category* | Citation of document, with indication, where appropriate, of the relevant passages | Relevant to claim No. |
| --- | --- | --- |
| X | CN1819706A (CHONGQING TELECOM COLLEGE) 16 Aug. 2006 (16.08.2006) description page 3 line 2 to page 4 line 8, fig. 2 | 1-12 |
| X | CN1529191A (UNIV SHANGHAI JIAOTONG) 15 Sep. 2004 (15.09.2004) description page 3 lines 17-26, fig. 1 | 1-4 |
| A | the whole document | 5-12 |
| A | CN101093264A (UNIV BEIJING) 26 Dec. 2007 (26.12.2007) the whole document | 1-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 Feb. 2010 (05.02.2010) | **25 Feb. 2010 (25.02.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **BAI,Tan** Telephone No. (86-10)62411245 |
| --- | --- |

Form PCT/ISA /210 (second sheet) (July 2009)

**INTERNATIONAL SEARCH REPORT**
Information on patent family members

International application No.

PCT/CN2009/074979

| Patent Documents referred in the Report | Publication Date | Patent Family | Publication Date |
|---|---|---|---|
| CN1819706A | 16.08.2006 | NONE | |
| CN1529191A | 15.09.2004 | CN1216305C | 24.08.2005 |
| CN101093264A | 26.12.2007 | CN100478720C | 15.04.2009 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810177646